# FASCICULE DE BREVET EUROPEEN

(11) **EP 3 000 155 B1**
(45) Date de publication et mention de la délivrance du brevet: **12.07.2017**
(21) Numéro de dépôt: 14731702.8
(22) Date de dépôt: 21.05.2014
(51) Int. Cl.: H01R 13/66, G01K 1/14, G01K 1/16, H01R 24/30

(54) **APPAREILLAGE ÉLECTRIQUE COMPORTANT UN CAPTEUR DE TEMPÉRATURE LOGÉ DANS UN ÉLÉMENT DE SUPPORT**
ELEKTRISCHE VORRICHTUNG MIT IN EINEM TRÄGERELEMENT UNTERGEBRACHTEM TEMPERATURSENSOR
ELECTRICAL APPARATUS COMPRISING A TEMPERATURE SENSOR HOUSED IN A SUPPORT ELEMENT

(30) Priorité: 22.05.2013 FR 1354587
(43) Date de publication de la demande: 30.03.2016
(73) Titulaire: Legrand France, 87000 Limoges (FR); Legrand SNC, 87000 Limoges (FR)
(72) Inventeur: CHAUMENY, Jean-Luc, F-87590 Saint Just Le Martel (FR); VALADAS, Vincent, F-87240 Ambazac (FR); NORMAND, Romain, F-87000 Limoges (FR)
(74) Mandataire: Orsini, Fabienne
(86) Numéro de dépôt international: PCT/FR2014/051198
(87) Numéro de publication internationale: WO 2014/188130

(56) Documents cités:
- DE-A1- 4 108 789
- DE-A1- 10 314 406
- DE-A1- 19 901 935
- GB-A- 2 020 123
- GB-A- 2 207 509

## Description

### DOMAINE TECHNIQUE AUQUEL SE RAPPORTE L'INVENTION

La présente invention concerne un appareillage électrique comportant un corps électriquement isolant logeant au moins deux éléments de connexion électrique, ainsi qu'un capteur de température.

Elle trouve une application particulièrement avantageuse dans la réalisation d'une fiche de connexion d'un appareil électrique, et d'une fiche de connexion destinée à la recharge d'une batterie d'un véhicule électrique.

### ARRIERE-PLAN TECHNOLOGIQUE

On connaît notamment du document US20090251832, un appareillage tel que décrit en introduction, constituant une fiche de connexion électrique, dans laquelle chacun des deux éléments de connexion électrique est connecté à une broche de connexion faisant saillie de la face avant dudit corps.

L'appareillage électrique décrit dans ce document comporte, afin de surveiller l'échauffement de la fiche électrique, deux thermistances, qui sont chacune collée sur l'un des éléments de connexion électrique de la fiche électrique.

Ce dispositif présente l'inconvénient de nécessiter l'utilisation de deux thermistances. En outre, le placement de ces thermistances sur les éléments de connexion électrique est réalisé de manière peu précise et en conséquence non reproductible. DE 41 08 789 A1 décrit un appareillage électrique selon le préambule de la revendication 1.

### OBJET DE L'INVENTION

Afin de remédier aux inconvénients précités de l'état de la technique, la présente invention propose un appareillage électrique dans lequel un seul capteur de température est utilisé, disposé de manière précise et reproductible dans le corps de l'appareillage électrique, et permettant une détection efficace de l'échauffement d'au moins un des éléments de connexion électrique.

A cet effet, l'invention propose un appareillage électrique tel que décrit en introduction, dans lequel le capteur de température est accueilli dans un élément de support thermiquement conducteur et électriquement isolant distinct dudit corps, qui est rapporté à l'intérieur de ce corps, de manière à s'étendre entre lesdits éléments de connexion électrique, en retrait des faces externes dudit corps.

Ainsi, l'élément de support du capteur de température forme un pont thermique conduisant la chaleur dissipée par les deux éléments de connexion électrique. Il est alors possible d'utiliser un unique capteur de température permettant de surveiller la température à l'intérieur de l'appareillage électrique et de détecter l'échauffement de l'un ou l'autre ou les deux éléments de connexion électrique, puisque l'élément de support conduit la chaleur jusqu'au capteur de température.

Le fait que cet élément de support soit enfermé dans le corps de l'appareillage électrique limite les échanges thermiques entre l'élément de support et toute autre partie de l'environnement de l'appareillage électrique. En particulier, l'élément de support logeant le capteur de température ne comporte aucune partie ou surface en contact avec l'environnement extérieur de l'appareillage électrique. La température mesurée par le capteur de température placé dans l'élément de support reflète ainsi plus précisément la température des éléments de connexion électrique, puisqu'elle n'est pas influencée par la température de l'environnement de l'appareillage électrique à l'extérieur du corps de cet appareillage.

En outre, grâce à cet élément de support logeant le capteur de température, il est possible de placer précisément le capteur de température par rapport à l'élément de support et par conséquent par rapport à l'ensemble de l'appareillage électrique. Ce placement peut en outre être facilement rendu reproductible.

D'autres caractéristiques non limitatives et avantageuses de l'appareillage électrique conforme à l'invention sont les suivantes :
- ledit élément de support comporte un moyen de montage sur au moins l'un desdits éléments de connexion électrique ;
- chaque moyen de montage pince l'élément de connexion électrique correspondant ;
- chaque moyen de montage comprend un logement avec deux faces internes orientées l'une vers l'autre, dont une première face interne adaptée à venir épouser une face correspondante de l'élément de connexion électrique et une deuxième face interne comportant au moins une partie courbe adaptée à repousser l'élément de connexion électrique contre ladite première face interne ;
- ledit moyen de montage est un moyen de montage par clipsage sur l'élément de connexion électrique correspondant ;
- ledit élément de support comporte au moins une première branche avec deux extrémités opposées, munie chacune d'un moyen de montage sur l'un des éléments de connexion électrique ;
- ledit élément de support comporte, dans une partie centrale, un orifice adapté à recevoir ledit capteur de température ;
- le corps loge trois éléments de connexion électrique et l'élément de support logeant le capteur de température est placé au contact de ces trois éléments de connexion électrique ;
- ledit élément de support présente une section en forme de T, avec une première branche munie de deux extrémités opposées, comportant des moyens de montage sur deux premiers éléments de connexion électrique et une deuxième branche s'étendant entre ladite première branche et le troisième élément de connexion électrique ;
- ledit élément de support est monté entre l'élément de connexion électrique relié à la phase et sur l'élément de connexion électrique relié au neutre ;
- ledit capteur électrique est une thermistance ;
- ledit élément de support est réalisé dans un matériau polymère contenant des particules de céramique ;
- le matériau utilisé pour réaliser l'élément de support présente une conductivité thermique supérieure ou égale à 10 Watt par mètre carré-Kelvin ;
- ledit appareillage électrique est une fiche électrique comportant deux broches de connexion électrique faisant saillie d'une face externe avant du corps et étant chacune connectée électriquement à l'intérieur du corps à l'un desdits éléments de connexion électrique ;
- ledit appareillage électrique est une fiche électrique comportant deux broches de connexion électrique faisant saillie d'une face externe avant du corps et se prolongeant chacune à l'intérieur du corps par une queue formant un desdits éléments de connexion électrique destiné à recevoir une partie conductrice d'un conducteur électrique et ledit élément support est traversé par lesdites broches de sorte qu'il constitue un support de broches ;
- ledit élément support se présente globalement sous la forme d'une plaquette percée de deux orifices au travers desquels sont engagées à force lesdites broches, cette plaquette présentant une face avant qui jouxte la face interne arrière de la paroi avant du corps et, à l'opposé, une face arrière sur laquelle émergent lesdites queues des broches ;
- la face arrière de l'élément support comporte en saillie au moins une nervure qui délimite au moins un logement d'accueil d'un capteur de température ; et
- l'élément support comporte des moyens d'encliquetage d'une carte support d'un circuit imprimé auquel est connecté électriquement chaque capteur de température.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue schématique en perspective arrière partielle d'un premier mode de réalisation d'un appareillage électrique du type fiche de connexion électrique conforme à l'invention,
- la figure 2 est une vue schématique en perspective arrière partielle de la fiche de connexion électrique de la figure 1, retournée de 180 degrés par rapport à la figure 1,
- la figure 3 est une vue schématique en perspective avant de l'élément de support de la fiche de connexion électrique de la figure 1,
- la figure 4 est une vue schématique en perspective arrière de l'élément de support de la fiche de connexion électrique de la figure 1,
- la figure 5 est une vue schématique de profil de l'élément de support de la fiche de connexion électrique de la figure 1,
- la figure 6 est une vue schématique de la face arrière de l'élément de support de la fiche de connexion électrique de la figure 1,
- la figure 7 est une vue schématique de la face avant de l'élément de support de la fiche de connexion électrique de la figure 1,
- la figure 8 est une vue schématique en perspective avant éclatée de la fiche de connexion de la figure 1,
- la figure 9 est une vue schématique en perspective arrière éclatée de la fiche de connexion de la figure 1,
- la figure 10 est une vue schématique en perspective arrière partielle d'un deuxième mode de réalisation d'un appareillage électrique du type fiche de connexion électrique conforme à l'invention,
- la figure 11 est une vue schématique en perspective arrière partielle de la fiche de connexion électrique de la figure 10, retournée de 180 degrés par rapport à la figure 10,
- la figure 12 est une vue schématique en coupe partielle de la fiche de connexion électrique de la figure 10,
- la figure 13 est une vue schématique en perspective arrière de l'élément de support de la fiche de connexion électrique de la figure 10,
- la figure 14 est une vue schématique de la face arrière de l'élément de support de la fiche de connexion électrique de la figure 10,
- la figure 15 est une vue schématique de la face avant de l'élément de support de la fiche de connexion électrique de la figure 10,
- la figure 16 est une vue schématique de profil de l'élément de support de la fiche de connexion électrique de la figure 10,
- la figure 17 est une vue schématique en perspective éclatée de la fiche de connexion électrique de la figure 10,
- la figure 18 est une vue schématique en perspective d'une autre mode de réalisation de l'appareillage électrique conforme à l'invention ;
- la figure 19 est une vue en coupe selon plan A-A de la figure 18 ;
- la figure 20 est une vue schématique partielle en perspective de l'appareillage électrique de la figure 18 sans son boîtier externe isolant ; et
- la figure 21 est une vue arrière de la figure 20..

On notera en préambule que les éléments identiques ou similaires des différents modes de réalisation seront dans la mesure du possible référencés par les mêmes signes de référence et ne seront pas décrits à chaque fois.

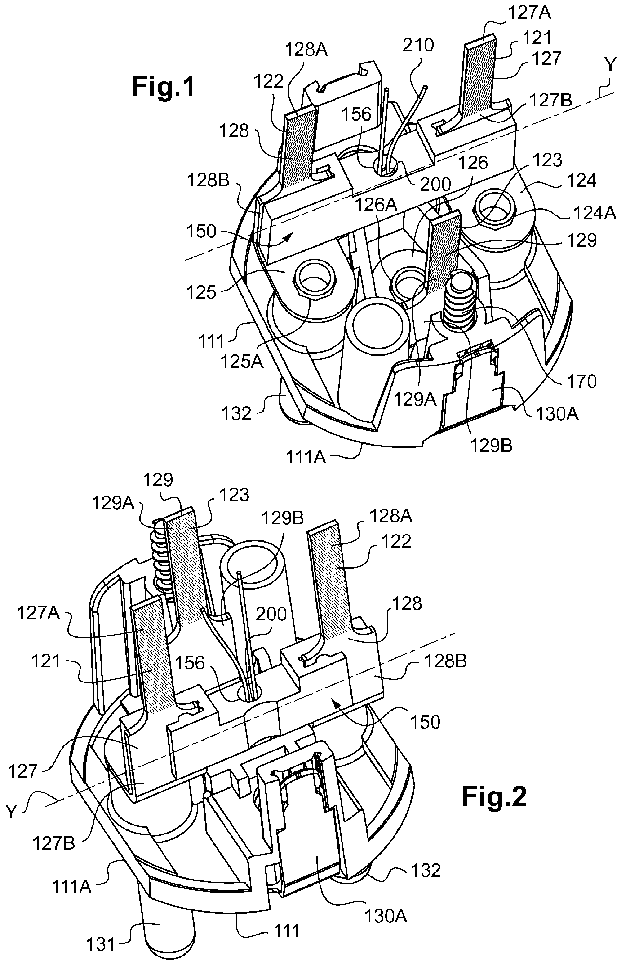

Sur les figures 1 à 17, on a représenté deux modes de réalisation possibles d'un appareillage électrique 100 conforme à l'invention.

Ces deux modes de réalisation ne diffèrent que par la géométrie particulière de l'élément de support du capteur de température décrit plus loin.

L'appareillage électrique en question est ici une fiche électrique 100 de connexion d'un appareil électrique (non représenté), adaptée à être enfichée dans une prise électrique complémentaire (non représentée), afin d'alimenter électriquement cet appareil électrique. L'appareil électrique en question peut notamment être un véhicule électrique comportant une batterie électrique reliée à ladite fiche électrique 100 par un câble d'alimentation 114 pour son raccordement à une prise électrique en vue de sa recharge.

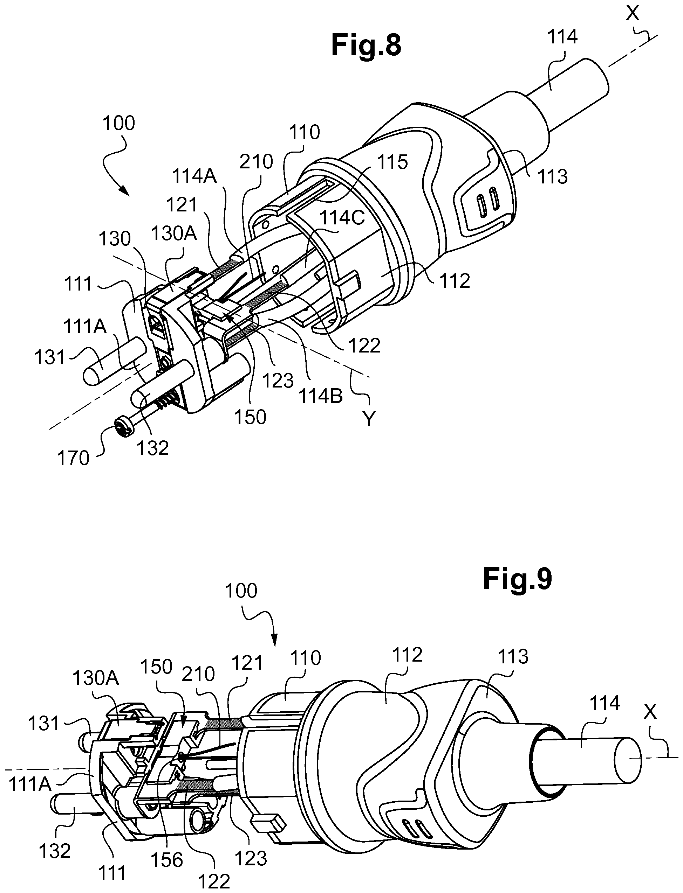

Cette fiche électrique 100 comporte de manière classique un corps 110 isolant électriquement (figures 8, 9 et 17) qui loge ici trois éléments de connexion électrique 121, 122, 123.

Ce corps 110 isolant présente une forme allongée selon la direction d'un axe longitudinal X de la fiche électrique 100.

Il est réalisé en matériau isolant électriquement, par exemple par moulage de matière plastique.

Il forme un boîtier qui comprend une paroi avant 111 et une paroi latérale 112. Il est fermé à l'arrière par une partie arrière 113 dont émerge un câble d'alimentation 114.

Ce câble d'alimentation 114 permet de relier électriquement la fiche électrique 100 à l'appareil électrique correspondant.

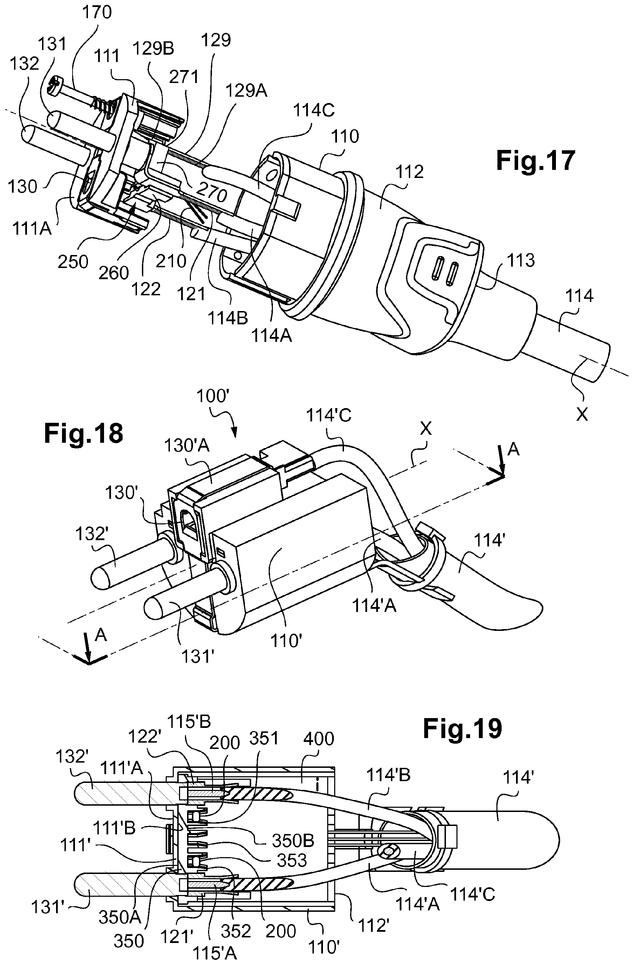

La paroi latérale 112 se présente ici sous la forme d'un manchon. La paroi avant 111 ferme à l'avant ce manchon. Elle est fixée sur lui par exemple par vissage d'une vis de fixation 170 (figures 8 et 17) traversant ladite paroi avant 111 dans un puits taraudé de ce manchon.

A l'intérieur de ce manchon, comme visible sur les figures 8 et 17, le câble d'alimentation 114 est dépourvu de son enveloppe externe isolante, et les fils conducteurs 114A, 114B et 114C acheminés à l'intérieur de cette enveloppe peuvent être désolidarisés les uns des autres de manière à être connectés chacun électriquement à l'une des extrémités de chaque élément de connexion 121, 122, 123. En pratique, les fils conducteurs 114A, 114B, 114C sont soudés ou sertis à l'extrémité des éléments de connexion 121, 122, 123.

Le corps 110 loge également partiellement deux broches 131, 132 métalliques de connexion électrique qui émergent de la face externe avant 111A de la paroi avant 111 du corps 110 suivant des directions parallèles à l'axe longitudinal X dudit corps 110 (figures 1, 2, 8, 9, 10, 11, 12 et 17).

Chacune de ces broches 131, 132 est adaptée à être insérée dans une borne de connexion électrique complémentaire de la prise électrique correspondante pour la connexion électrique de la fiche électrique 100.

Ladite paroi avant 111 du corps 110 comporte également un logement qui débouche sur la face externe avant 111 A de cette paroi avant 111 par une ouverture.

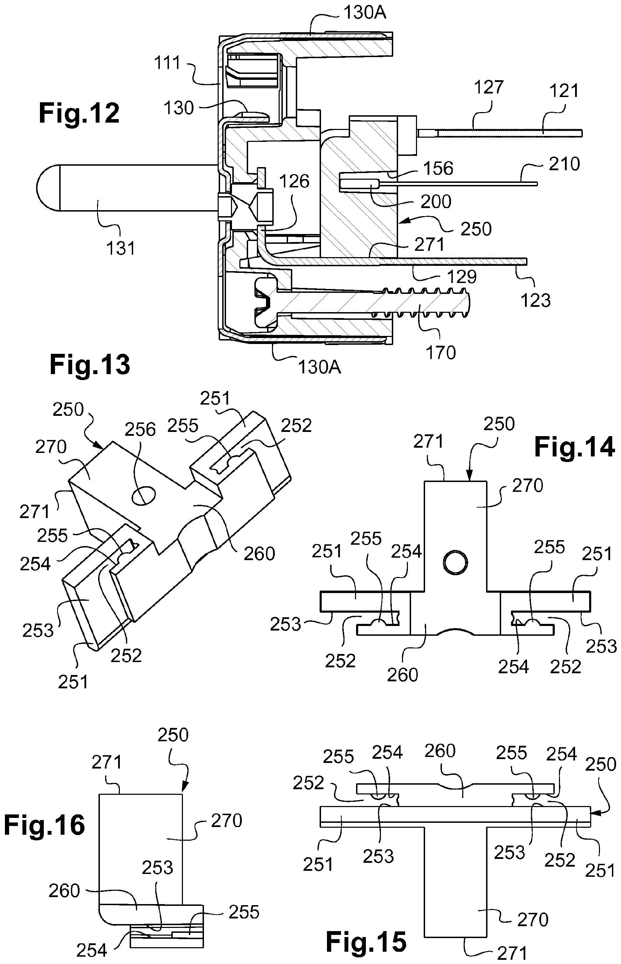

Ce logement loge une borne 130 adaptée à recevoir éventuellement une broche de terre de la prise électrique insérée au travers de ladite ouverture, afin de connecter la fiche électrique 100 à la terre (voir notamment figures 8 et 12).

Cela est le cas par exemple des prises électriques de standard français, qui comprennent en façade un puits de réception de la fiche électrique au fond duquel débouche les ouvertures donnant accès aux bornes de la prise électrique et dont fait saillie ladite broche de connexion à la terre.

Les exemples de fiche électrique 100 représentés sur les figures sont également adaptés à être utilisés avec des prises électriques conformes au standard germanique, dans lesquelles il est prévu également un puits de réception de la fiche électrique, au fond duquel débouchent les ouvertures donnant accès aux bornes de la prise électrique et dans lesquelles les extrémités diamétralement opposées d'une lyre de connexion à la terre font saillie de la paroi latérale du puits de la prise électrique.

A cet effet, la borne 130 logée dans le logement de la paroi avant 111 de la fiche électrique 100 comprend au moins une aile latérale 130A, qui s'étend à partir de la paroi avant 111, vers l'arrière de la fiche électrique 100 (voir notamment figure 8).

Cette aile latérale 130A est adaptée à se placer en vis-à-vis d'une fente 115 prévue longitudinalement dans la paroi latérale 112 du corps 110 de la fiche électrique 100.

De cette manière, l'aile latérale 130A de la borne 130 électrique est accessible à l'extérieur du corps 110 de la fiche électrique 100, de sorte que l'une des extrémités de la lyre de connexion à la terre de la prise électrique conforme au standard germanique puisse ainsi venir au contact de cette aile latérale 130A lors de l'insertion de la fiche électrique 100 dans la prise électrique correspondante.

Ici, la borne 130 comporte de manière avantageuse deux ailes latérales 130A diamétralement opposées.

Chacune des deux broches 131, 132 et la borne 130 de la fiche électrique 100, accessibles en face externe avant 111A de cette fiche électrique, comporte une partie arrière logée à l'intérieur du corps 110, qui fait saillie d'une face arrière de la paroi avant 111 dans ce corps (figures 1, 2, 10 et 11)

La partie arrière de chacune des deux broches 131, 132 et de la borne 130 est ainsi connectée électriquement à l'autre extrémité de l'un des éléments de connexion électrique 121, 122, 123 logés dans le corps 110, opposée à l'extrémité connectée aux fils conducteurs 114A, 114B, 114C. A cet effet, l'élément de connexion électrique peut être serti ou soudé sur la partie arrière de la broche correspondante, ou venir d'une seule pièce avec cette broche.

Les éléments de connexion électrique 121, 122, 123 constituent alors ici des éléments intermédiaires permettant de relier électriquement de manière aisée les broches 131, 132 et la borne 130 accessibles en face externe avant 111A de la fiche électrique 100 aux fils conducteurs 114A, 114B, 114C du câble d'alimentation 114.

Chacun de ces éléments de connexion électrique 121, 122, 123 se présente ici sous la forme d'une lame métallique coudée en forme de L.

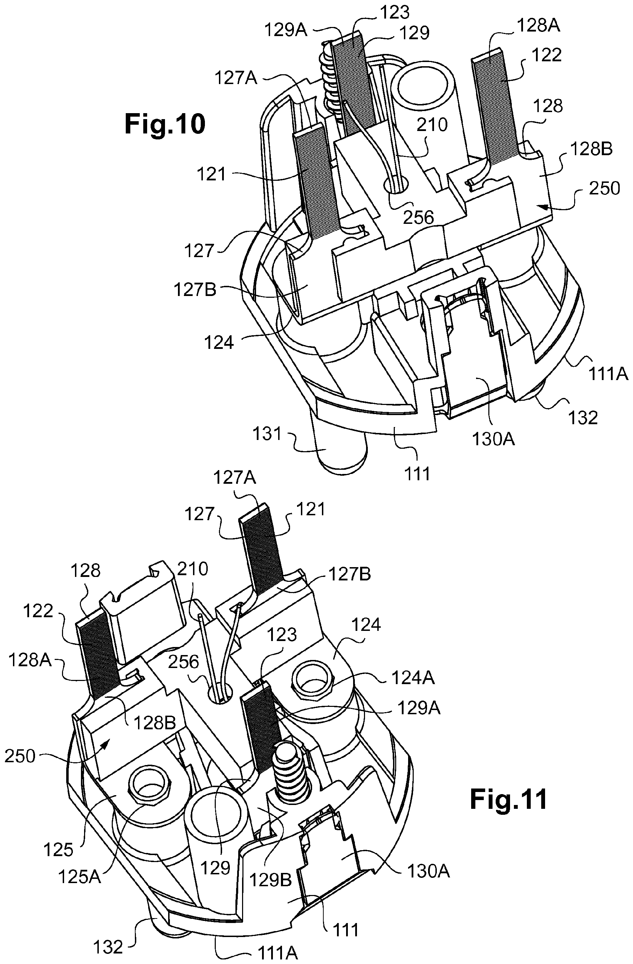

Plus particulièrement, chacun de ces éléments de connexion électrique 121, 122, 123 comporte une partie principale 127, 128, 129 qui s'étend parallèlement à l'axe longitudinal X du corps 110 et, à l'extrémité avant de cette partie principale, orientée vers la paroi avant 111 du corps 110, un retour 124, 125, 126 qui s'étend sensiblement perpendiculairement à cette partie principale. Ce retour 124, 125, 126 comporte une ouverture 124A, 125A, 126A qui est traversée par ladite partie arrière de la broche 131, 132 ou de la borne 130 correspondante de manière à établir la connexion électrique avec cette broche ou cette borne (voir figures 1 et 11).

La partie principale 127, 128, 129 de chaque élément de connexion électrique 121, 122, 123 comporte une base 127B, 128B, 129B voisine du retour 124, 125, 126 et une partie d'extrémité 127A, 128A, 129A dont la largeur est inférieure à celle de la base.

Les parties principales 127, 128, 129 et les retours 124, 125, 126 des éléments de connexion électrique 121, 122, 123 s'étendent parallèlement les uns aux autres (figure 1).

Les parties principales 127, 128 des deux éléments de connexion électrique 121, 122 connectés aux broches 131, 132 de la fiche électrique sont disposées dans un même premier plan. La partie principale 129 de l'élément de connexion électrique 123 connecté à la borne de terre 130 de la fiche électrique 100 se situe dans un deuxième plan parallèle décalé par rapport à ce premier plan.

La fiche électrique 100 comprend en outre un capteur de température 200.

Il s'agit ici plus particulièrement d'une thermistance. Cependant, tout capteur de température connu de l'homme du métier peut être envisagé.

Ce capteur de température 200 est accueilli dans un élément de support 150 ; 250 thermiquement conducteur et électriquement isolant distinct dudit corps 110, qui est rapporté à l'intérieur de ce corps 110, de manière à s'étendre entre lesdits éléments de connexion électrique 121, 122, 123, en retrait des faces externes dudit corps 110.

En d'autres termes, l'élément de support 150 ; 250 constitue une pièce distincte du corps 110, enfermée à l'intérieur du boîtier que constitue le corps 110.

Il ne présente ici aucune partie en contact avec l'extérieur de ce corps 110.

En particulier, ici, comme le montrent les figures 1, 2, 8, 9, 12, 13 et 19, l'élément de support 150 ; 250 est disposé en retrait de la face interne de la paroi avant 111, de la paroi latérale 112 et de la partie arrière 113 du corps 110.

Plus précisément, cet élément de support 150 ; 250 occupe un volume très réduit autour et entre les éléments de connexion électrique 121, 122, 123.

Selon un premier mode de réalisation de la fiche électrique 100 conforme à l'invention, représenté sur les figures 1 à 9, l'élément de support 150 s'étend entre les deux éléments de connexion électrique 121, 122 reliés aux broches 131, 132 de la fiche électrique 100.

Il présente alors la forme d'une plaquette allongée selon un axe principal Y (figures 1, 2 et 8), comportant deux extrémités 151 opposées le long de cet axe principal.

Cet élément de support 150 est disposé dans le corps 110 de telle sorte que son axe principal Y s'étende transversalement à l'axe longitudinal X du corps 110.

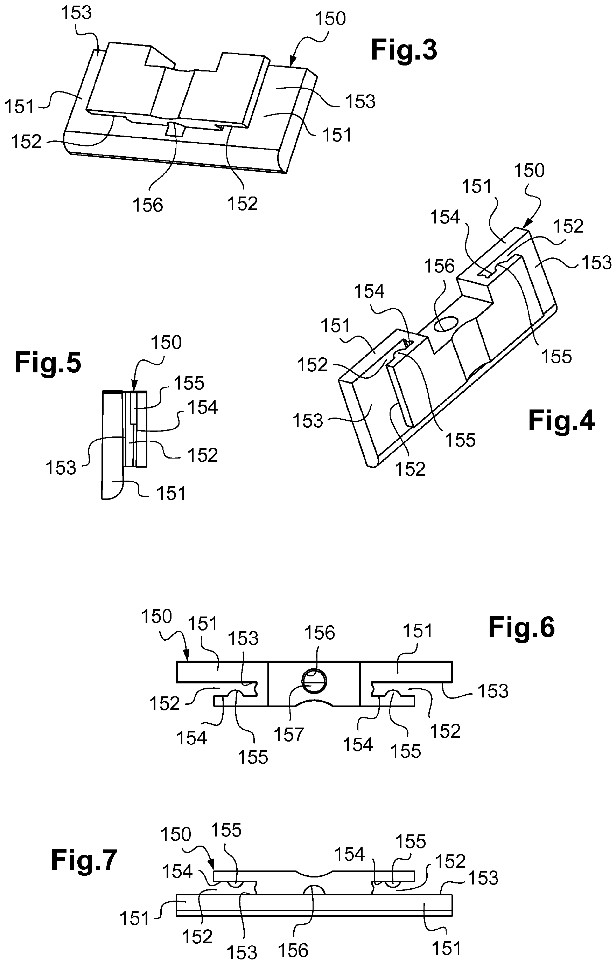

Chacune des extrémités 151 (voir figure 3) de l'élément de support 150 comporte ici un moyen de montage de l'élément de support 150 sur l'un des éléments de connexion électrique 121, 122.

Chaque moyen de montage pince l'élément de connexion électrique correspondant.

A cet effet, chaque moyen de montage comprend un logement 152 qui reçoit l'un des éléments de connexion 121, 122. Chaque logement 152 se présente ici comme une fente ménagée dans l'extrémité libre 151 de l'élément de support 150.

Cette fente comporte un fond s'étendant parallèlement à l'axe longitudinal X du corps 110 de la fiche électrique 100 et deux faces internes 153, 154 orientées l'une vers l'autre, parallèles à l'axe principal Y de l'élément de support 150 et à l'axe longitudinal X du corps de la fiche électrique 100.

Une première face interne 153 de ce logement 152 est adaptée à venir épouser une face correspondante de l'élément de connexion électrique 121, 122 et une deuxième face interne 154 de ce logement 152 comporte au moins une partie courbe adaptée à repousser l'élément de connexion électrique 121, 122 contre ladite première face interne 153.

Ici, la première face interne 153 du logement 152 est globalement plane, de manière à s'appliquer contre l'élément de connexion 121, 122.

De manière à maximiser la conduction thermique de la chaleur dissipée par l'élément de connexion 121, 122 par l'élément de support 150, en limitant l'encombrement de cet élément de support 150, la première face interne 153 de l'élément de support 150 s'applique contre la base 127B, 128B de l'élément de connexion 121, 122 correspondant, qui présente une largeur supérieure à la partie d'extrémité de l'élément de connexion 121, 122 (voir figure 1).

En saillie de la deuxième face interne 154 de chaque logement 152 s'élève, en direction de la première face interne 153, une nervure 155 arrondie formant ladite partie courbe de la deuxième face interne 154 du logement 152 (voir figure 2).

Cette nervure 155 s'étend selon une direction transversale à l'axe principal Y de l'élément de support 150. En conséquence, la nervure 155 s'étend parallèlement à l'axe longitudinal X du corps 110, c'est-à-dire parallèlement à la partie principale 127, 128 de l'élément de connexion 121, 122.

L'épaisseur de la nervure 155 est prévue de telle sorte que la largeur du logement 152 au niveau de cette nervure 155 est légèrement plus faible que l'épaisseur de la base 127B, 128B de l'élément de connexion 121, 122.

Ainsi, lorsque la base 127B, 128B de l'élément de connexion 121, 122 est introduite dans le logement 152, la partie de l'élément de support 150 qui porte la deuxième face interne 154 munie de la nervure 155 du logement 152 se déforme légèrement pour permettre le passage de cette base de l'élément de connexion électrique.

De cette manière, la base de l'élément de connexion 121, 122 est repoussée par la nervure 155 contre la première face interne 153, et se trouve serrée, en d'autres termes, pincée, entre la nervure 155 et la première face interne 153 du logement 152 de l'élément de support 150 (figures 1 et 2).

Le contact entre la première face interne 153 du logement 152 et l'élément de support 150 du capteur de température 200 est ainsi assuré.

Les dimensions et la géométrie de la première face interne 153 du logement 152 sont en outre déterminées pour maximiser la surface de contact entre cette première face interne 153 et l'élément de connexion 121, 122, tout en limitant l'encombrement stérique lié à la présence de cet élément de support 150.

De cette manière, la conduction de la chaleur dissipée par les éléments de connexion 121, 122 par l'élément de support est optimisée, tandis que son volume est limité.

Ici, par exemple, la première face interne 153 présente des dimensions supérieures à celles de la deuxième face interne, et présente un bord courbe adapté à suivre la courbure de l'élément de connexion 121, 122 à la jonction entre la partie principale 127, 128 et le retour 124, 125 de l'élément de contact 121, 122.

La nervure 155 s'élève avantageusement seulement sur une partie de la deuxième face interne 154 du logement 152 (figure 5).

En variante, cette nervure peut s'élever sur la totalité de la deuxième face interne du logement. Elle peut également être remplacée par un ou plusieurs renflements arrondis jouant le même rôle. On peut enfin envisager que la deuxième face interne du logement soit courbée globalement sur toute sa surface, avec au moins une partie de sa surface courbée en direction de la première face interne du logement.

En variante encore, chaque moyen de montage peut être un moyen de montage par clipsage sur l'élément de connexion électrique correspondant. Ce clipsage peut par exemple être réalisé grâce à des moyens similaires à ceux décrits ici : il s'agirait par exemple d'introduire la partie d'extrémité de l'élément de connexion dans une fente similaire à celle décrite précédemment, avec un passage de point dur défini par une nervure semblable à celle décrite précédemment.

Enfin, l'élément de support 150 comporte, dans une partie centrale, un orifice 156 adapté à recevoir ledit capteur de température 200.

Cet orifice 156 est ici disposé au milieu de l'élément de support 150, c'est-à-dire à mi-chemin entre ses deux extrémités 151 opposées (voir figures 1 et 2).

Il s'étend perpendiculairement par rapport à l'axe principal Y de l'élément de support 150, parallèlement à l'axe longitudinal X du corps 110 de la fiche électrique 100.

Il s'agit ici d'un orifice cylindrique dont le diamètre est similaire aux dimensions transverses du capteur de température 200, à un jeu près autorisant son introduction dans l'orifice 156.

Cet orifice 156 est au moins partiellement obturé par une paroi de fond 157, du côté de l'élément de support 150 orienté vers l'avant de la fiche électrique 100.

Ici la paroi de fond 157 obture à moitié l'orifice 156 (voir figure 6).

Lors de l'assemblage de la fiche électrique 100, le capteur de température 200 peut ainsi être introduit dans l'orifice 156 jusqu'à venir en butée contre la paroi de fond 157. La position de ce capteur de température 200 dans l'élément de support 150 est ainsi précisément définie et facilement reproductible.

Les moyens de montage de l'élément de support 150 sur les éléments de connexion 121, 122 assurant par ailleurs un montage de cet élément de support 150 à une position précise et reproductible, la position du capteur de température 200 dans la fiche électrique 100 est ainsi précisément connue et facilement reproductible.

Selon un deuxième mode de réalisation de la fiche électrique conforme à l'invention, représenté sur les figures 10 à 17, l'élément de support 250 logeant le capteur de température 200 est en contact avec les trois éléments de connexion électrique 121, 122, 123 de la fiche électrique 100.

A cet effet, l'élément de support 250 présente une section en forme de T, avec une première branche 260 similaire à l'élément de support décrit dans le premier mode de réalisation, et une deuxième branche 270 s'étendant à la perpendiculaire entre ladite première branche et le troisième élément de connexion électrique 123 (figures 10 à 16).

Plus précisément, la première branche 260 de l'élément de support 250 est munie de deux extrémités opposées 251 (figures 13 à 15), chacune comportant un moyen de montage sur l'un des deux éléments de connexion électrique 121, 122 connectés aux broches de connexion 131, 132 de la fiche électrique 100.

Comme dans le premier mode de réalisation, chaque moyen de montage pince l'élément de connexion électrique correspondant.

A cet effet, chaque moyen de montage comprend un logement 252 qui reçoit l'un des éléments de connexion 121, 122. Les logement 252 sont identiques à ceux décrits précédemment, avec deux faces internes 253, 254 orientées l'une vers l'autre, dont une première face interne 253 adaptée à venir épouser une face correspondante de l'élément de connexion électrique 121, 122 et une deuxième face interne 254 de ce logement 152 qui comporte au moins une partie courbe adaptée à repousser l'élément de connexion électrique 121, 122 contre ladite première face interne 253 (figures 13 à 16).

Comme dans le premier mode de réalisation, cette partie courbe de la deuxième face interne 154 du logement 152 se présente sous la forme d'une nervure 255 arrondie qui fait saillie de cette deuxième face interne 254 à l'intérieur du logement 252, en direction de la première face interne 253 (figures 13 à 16).

Les détails de réalisation, avantages et variantes envisageables pour les moyens de montage de cette première branche 260 de l'élément de support 250 sont identiques à ceux décrits en référence au premier mode de réalisation et ne seront pas répétés ici.

La deuxième branche 270 de l'élément de support 250 s'étend à partir de la partie centrale de la première branche 260, située entre les éléments de connexion 121, 122 de la fiche électrique 100, perpendiculairement à cette première branche 260.

Elle comporte une extrémité libre 271 présentant une forme adaptée pour venir au contact du troisième élément de connexion 123 de la fiche électrique 100, relié à la borne de terre de la fiche électrique 100. Cette extrémité libre 271 de la deuxième branche 270 de l'élément de support 250 vient ici au contact d'une portion de la base 129B et d'une portion de la partie d'extrémité 129A de la partie principale 129 de ce troisième élément de connexion 123.

Ici, l'extrémité libre 271 de la deuxième branche 270 est plane.

En outre, l'extrémité libre 271 de la deuxième branche 270 de l'élément de support 250 ne comporte aucun moyen de montage sur le troisième élément de connexion 123 de la fiche électrique 100, mais la longueur de la deuxième branche 270 est déterminée de manière à ce que la face plane formant l'extrémité libre 271 s'applique contre la base 129B de la partie principale 129 du troisième élément de connexion 123 (figures 10 et 11).

En variante, on peut prévoir que l'extrémité libre de la deuxième branche de l'élément de support comporte des moyens de montage sur ce troisième élément de connexion de la fiche électrique.

Enfin, l'élément de support 250 comporte, comme dans le premier mode de réalisation de la fiche électrique 100, un orifice 256 adapté à recevoir ledit capteur de température 200.

Cet orifice 256 est disposé dans la deuxième branche 270 de l'élément de support 250. Il s'étend parallèlement à l'axe longitudinal X du corps 110 de la fiche électrique 100.

Il s'agit ici d'un orifice cylindrique dont le diamètre est similaire aux dimensions transverses du capteur de température, à un jeu près autorisant son introduction dans l'orifice 256.

Cet orifice 256 est ici un orifice borgne du côté de l'élément de support 250 orienté vers l'avant de la fiche électrique 100 (figure 17).

Comme précédemment, le capteur de température 200 peut ainsi être positionné précisément et de manière reproductible dans le corps 110 de la fiche électrique 100.

Sur les figures 18 à 21, on représenté un autre mode de réalisation possible de l'appareillage électrique conforme à l'invention.

Il s'agit également d'une fiche électrique 100' qui comporte de manière classique un corps 110' isolant électriquement, allongé suivant un axe longitudinal X, ce corps formant un boîtier avec une paroi avant 111', une paroi latérale et une partie arrière 112' dont émergent des conducteurs électriques 114'A, 114'B, 114'C isolés, issus d'un câble d'alimentation 114' qui permet de relier électriquement la fiche électrique 100' à l'appareil électrique correspondant. Le corps 110' loge partiellement deux broches 131', 132' métalliques de connexion électrique émergeant à l'extérieur de la face externe avant 111'A de la paroi avant 111' du corps 110 suivant des directions parallèles à l'axe longitudinal X. Les broches 131', 132' se prolongent chacune à l'intérieur du corps 110' par une queue 121',122' formant un élément de connexion électrique destiné à recevoir une âme métallique conductrice 115'A, 115'B du conducteur électrique 114'A, 114'B issu du câble 114'. Ici, préférentiellement, comme cela est mieux visible sur la figure 19, chaque broche 131', 132' est décolletée et chaque conducteur électrique 114'A, 114'B est serti à l'intérieur de la queue 121', 122' de la broche correspondante. Bien entendu, en variante, on pourra prévoir que l'âme conductrice dénudée de chaque conducteur électrique soit soudée à la queue de la broche.

Chacune de ces broches 131', 132' est adaptée à être insérée dans une borne de connexion électrique complémentaire de la prise électrique correspondante pour la connexion électrique de la fiche électrique 100'.

Ladite paroi avant 111' du corps 110' comporte également un logement qui débouche sur la face externe avant 111'A de cette paroi avant 111' par une ouverture. Comme le montre la figure 18, ce logement loge une borne 130' adaptée à recevoir éventuellement une broche de terre de la prise électrique insérée au travers de ladite ouverture, afin de connecter la fiche électrique 100' à la terre. Cela est le cas par exemple des prises électriques de standard français, qui comprennent en façade un puits de réception de la fiche électrique au fond duquel débouche les ouvertures donnant accès aux bornes de la prise électrique et dont fait saillie ladite broche de connexion à la terre.

La fiche électrique 100' représentée sur les figures 18 à 21 est également adaptée à être utilisée avec des prises électriques conformes au standard germanique, dans lesquelles il est prévu également un puits de réception de la fiche électrique, au fond duquel débouchent les ouvertures donnant accès aux bornes de la prise électrique et dans lesquelles les extrémités diamétralement opposées d'une lyre de connexion à la terre font saillie de la paroi latérale du puits de la prise électrique.

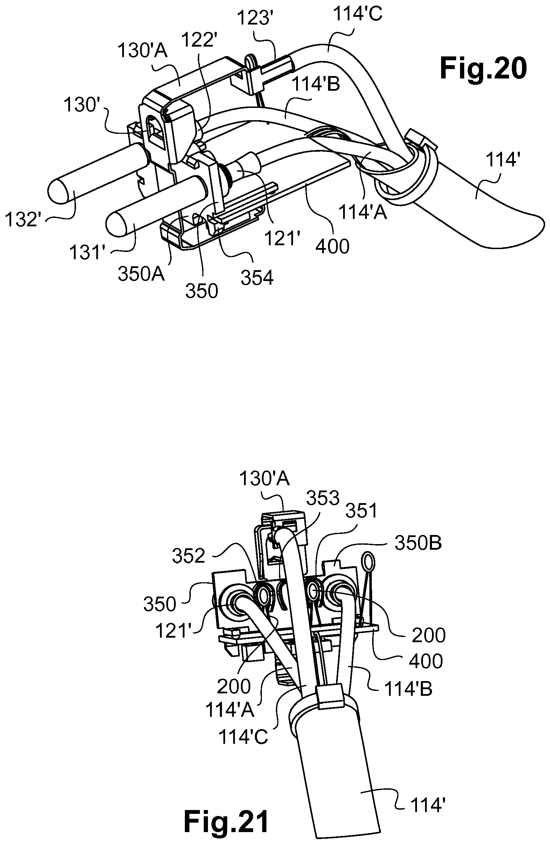

A cet effet, la borne 130' logée dans le logement de la paroi avant 111' de la fiche électrique 100' comprend deux ailes latérales 130'A conductrices, qui s'étendent à partir de la paroi avant 111', vers l'arrière de la fiche électrique 100' (voir figure 18). Une des ailes latérales 130'A est raccordée à un élément de connexion 123' auquel est sertie l'âme dénudée conductrice du conducteur électrique 114'C de terre issu du câble 114' (voir figure 20). Chaque aile latérale 130'A s'étend sur la paroi latérale du corps 110' de la fiche électrique 100'. Le corps 110' est ici destiné à être surmoulé d'une enveloppe externe isolante coudée (non représentée) qui, à l'arrière, recouvre la paroi arrière 112' du corps 110' et enferme également la partie des conducteurs électriques 114'A, 114'B, 114'C émergeant du corps 110' ainsi qu'une partie de la gaine isolante du câble 114'. A l'avant, cette enveloppe externe isolante recouvre la paroi latérale et la paroi avant 111' du corps 110' autour des broches 131', 132', de la borne 130' et des ailes latérales 130'A de façon à les laisser apparentes et accessibles à la surface externe de la fiche électrique 100'. De cette manière, chaque aile latérale 130'A de la borne 130' électrique est accessible à l'extérieur de la fiche électrique 100', de sorte que chaque extrémité de la lyre de connexion à la terre de la prise électrique conforme au standard germanique puisse ainsi venir au contact de chaque aile latérale 130'A lors de l'insertion de la fiche électrique 100' dans la prise électrique correspondante.

De manière remarquable ici, comme le montrent mieux les figures 19 à 21, l'élément support 350 thermiquement conducteur et électriquement isolant qui loge un capteur de température 200 et qui est rapporté à l'intérieur du corps 110' en retrait des faces externes dudit corps 110', est traversé par lesdites broches 131', 132' de sorte qu'il constitue un support de broches. L'élément support 350 s'étend entre les queues 121', 122' des broches 131', 132'.

Plus particulièrement, cet élément support 350 se présente globalement sous la forme d'une plaquette percée de deux orifices au travers desquels sont engagées à force lesdites broches 131', 132'. C'est pour cela que, avantageusement, chaque broche 131', 132' comporte sur une partie de sa surface externe, située à la base de la broche, juste avant la queue, un moletage ou un crantage permettant de renforcer le maintien de la broche dans l'élément support 350. La plaquette 350 présente une face avant 350A qui jouxte la face interne arrière 111'B de la paroi avant 111' du corps 110' et, à l'opposé, une face arrière 350B sur laquelle émergent lesdites queues 121', 122' des broches 131', 132'. La face arrière 350B de la plaquette formant l'élément support 350, comporte en saillie au moins une nervure 351 qui délimite au moins un logement d'accueil d'un capteur de température 200. Ici, elle comporte trois nervures 351, 352, 353 délimitant trois logements pour trois capteurs 200 éventuels.

Quel que soit le mode de réalisation considéré, la fiche électrique comporte en outre un circuit électrique secondaire relié à ce capteur de température 200.

On entend ici par circuit électrique secondaire un circuit électrique de la fiche électrique 100 ; 100' distinct du circuit électrique principal reliant les broches 131, 132; 131', 132' de la fiche électrique 100; 100' à l'appareil électrique correspondant.

On a ici représenté seulement les fils conducteurs 210 de sortie du capteur de température 200. En pratique, ces fils conducteurs 210 (figure 12) sont connectés électriquement avec d'autres fils conducteurs acheminés par le câble d'alimentation 114. Cela permet de relier le capteur de température 200 à une unité de commande électronique de l'appareil électrique alimenté par l'intermédiaire de la fiche électrique selon l'invention.

Avantageusement, selon l'exemple représenté sur les figures 20 et 21, l'élément support 350 comporte des moyens d'encliquetage 354 d'une carte support d'un circuit imprimé 400 formant le circuit secondaire auquel est connecté électriquement chaque capteur de température 200.

Si l'un au moins des éléments de connexion 121, 122, 123 ; 121', 122' en contact avec l'élément de support 150 ; 250 ; 350 s'échauffe, la chaleur dissipée par cet élément de connexion est acheminée jusqu'au capteur de température 200 par l'élément de support 150 ; 250 ; 350. Lorsque la température mesurée par le capteur de température dépasse une valeur seuil de température, l'unité de commande est programmée pour stopper l'alimentation électrique de l'appareil électrique ou diminuer sa consommation électrique, donc l'intensité du courant électrique d'alimentation de l'appareil électrique.

Ainsi, le risque d'échauffement de la fiche électrique 100 ; 100' est limité.

Avantageusement, afin de rendre la mesure de température plus précise en réduisant le temps nécessaire à la détection de l'échauffement de l'un des éléments de connexion, l'élément de support 150 ; 250 ; 350 est réalisé dans un matériau polymère contenant des particules de céramique.

Le polymère est par exemple du polycaprolactame (PA6). Les particules de céramique sont noyées dans le polymère. Le taux de charge en particules de céramique de ce polymère est par exemple compris entre 10 et 30 pourcent en masse.

De préférence, le matériau utilisé pour réaliser l'élément de support 150 ; 250 ; 350 présente une conductivité thermique supérieure ou égale à 10 Watt par mètre carré-Kelvin.

Il s'agit de préférence d'un matériau différent de celui utilisé pour réaliser le corps 110 ; 110' de la fiche électrique 100 ; 100'.

En variante, la fiche électrique peut ne loger que deux éléments de connexion, par exemple un élément de connexion de phase et un élément de connexion de neutre. L'élément de support présente alors la forme décrite dans le premier mode de réalisation.

En variante encore on peut envisager que l'appareillage électrique soit une prise électrique. L'élément de support du capteur de température est alors en contact avec des éléments de connexion électrique reliés aux alvéoles et/ou à la borne de terre de la prise électrique.

## Revendications

1. Appareillage électrique (100 ;100') comportant un corps (110 ;110') électriquement isolant logeant au moins deux éléments de connexion électrique (121, 122, 123 ;121',122',123'), ainsi qu'un capteur de température (200), **caractérisé en ce que** ce capteur de température (200) est accueilli dans un élément de support (150 ; 250 ; 350) thermiquement conducteur et électriquement isolant distinct dudit corps (110 ;110'), qui est rapporté à l'intérieur de ce corps (110 ;110'), de manière à s'étendre entre lesdits éléments de connexion électrique (121, 122, 123 ;121', 122', 123'), en retrait des faces externes (111A ;111'A) dudit corps (110).

2. Appareillage électrique (100) selon la revendication 1, dans lequel ledit élément de support (150 ; 250) comporte un moyen de montage sur au moins l'un desdits éléments de connexion électrique (121, 122, 123).

3. Appareillage électrique (100) selon la revendication précédente, dans lequel chaque moyen de montage pince l'élément de connexion électrique (121, 122, 123) correspondant.

4. Appareillage électrique (100) selon la revendication précédente, dans lequel chaque moyen de montage comprend un logement (152 ; 252) avec deux faces internes (153, 154 ; 253, 254) orientées l'une vers l'autre, dont une première face interne (153; 253) adaptée à venir épouser une face correspondante de l'élément de connexion électrique (121 ; 122 ; 123) et une deuxième face interne (154; 254) comportant au moins une partie courbe (155; 255) adaptée à repousser l'élément de connexion électrique (121, 122, 123) contre ladite première face interne (154 ; 254).

5. Appareillage électrique selon la revendication 2, dans lequel ledit moyen de montage est un moyen de montage par clipsage sur l'élément de connexion électrique correspondant.

6. Appareillage électrique (100) selon l'une des revendications précédentes, dans lequel ledit élément de support (150 ; 250) comporte au moins une première branche (150; 260) avec deux extrémités opposées, munies chacune d'un moyen de montage sur l'un des éléments de connexion électrique (121, 122, 123).

7. Appareillage électrique selon l'une des revendications précédentes, dans lequel ledit élément de support (150; 250) comporte, dans une partie centrale, un orifice (156 ; 256) adapté à recevoir ledit capteur de température (200).

8. Appareillage électrique (100) selon l'une des revendications précédentes, dans lequel le corps (110) loge trois éléments de connexion électrique (121, 122, 123) et dans lequel l'élément de support (150 ; 250) logeant le capteur de température (200) est placé au contact de ces trois éléments de connexion électrique (121, 122, 123).

9. Appareillage électrique (100) selon la revendication précédente, dans lequel ledit élément de support (250) présente une section en forme de T, avec une première branche (260) munie de deux extrémités opposées, comportant des moyens de montage sur deux premiers éléments de connexion électrique (121, 122) et une deuxième branche (270) s'étendant entre ladite première branche (260) et le troisième élément de connexion électrique (123).

10. Appareillage électrique (100) selon l'une des revendications précédentes, dans lequel ledit élément de support (150, 250) comporte des moyens de montage sur l'élément de connexion électrique (121) relié à la phase et sur l'élément de connexion électrique (122) relié au neutre.

11. Appareillage électrique (100 ;100') selon l'une des revendications précédentes, dans lequel ledit capteur électrique est une thermistance (200).

12. Appareillage électrique (100 ;100') selon l'une des revendications précédentes, dans lequel ledit élément de support (150; 250 ; 350) est réalisé dans un matériau polymère contenant des particules de céramique.

13. Appareillage électrique (100 ;100') selon l'une des revendications précédentes, dans lequel le matériau utilisé pour réaliser l'élément de support (150 ; 250 ;350) présente une conductivité thermique supérieure ou égale à 10 Watt par mètre carré-Kelvin.

14. Appareillage électrique (100) selon l'une des revendications précédentes, dans lequel ledit appareillage électrique est une fiche électrique (100) comportant deux broches (131, 132) de connexion électrique faisant saillie d'une face externe avant (111 A) du corps (110) et étant chacune connectée électriquement à l'intérieur du corps (110) à l'un desdits éléments de connexion électrique (121, 122, 123).

15. Appareillage électrique (100') selon la revendication 1, dans lequel ledit appareillage électrique est une fiche électrique (100') comportant deux broches (131', 132') de connexion électrique faisant saillie d'une face externe avant (111'A) du corps (110') et se prolongeant chacune à l'intérieur du corps par une queue formant un desdits éléments de connexion électrique (121', 122') destiné à recevoir une partie conductrice (115'A, 115'B) d'un conducteur électrique (114'A,114'B), et dans lequel ledit élément support (350) est traversé par lesdites broches (131', 132') de sorte qu'il constitue un support de broches.

16. Appareillage électrique (100') selon la revendication 15, dans lequel ledit élément support (350) se présente globalement sous la forme d'une plaquette percée de deux orifices au travers desquels sont engagées à force lesdites broches (131',132'), cette plaquette présentant une face avant (350A) qui jouxte la face interne arrière (111'B) de la paroi avant (111') du corps (110') et, à l'opposé, une face arrière (350B) sur laquelle émergent lesdites queues (121', 122') des broches (131',132').

17. Appareillage électrique (100') selon l'une des revendications 15 et 16, dans lequel l'élément support (350) comporte des moyens d'encliquetage d'une carte support d'un circuit imprimé (400) auquel est connecté électriquement chaque capteur de température (200).

## Patentansprüche

1. Elektrische Vorrichtung (100; 100') mit einem elektrisch isolierenden Körper (110; 110'), in der wenigstens zwei elektrische Verbindungselemente (121, 122, 123; 121', 122', 123') sowie einen Temperatursensor (200) untergebracht sind, **dadurch gekennzeichnet, daß** der Temperatursensor (200) in einem wärmeleitenden und elektrisch isolierenden, vom Körper (110; 110') verschiedenen Trägerelement (150; 250; 350) untergebracht ist, das im Inneren dieses Körpers (110; 110') derart eingefügt ist, das es sich zwischen den elektrischen Verbindungselementen (121, 122, 123; 121', 122', 123') gegenüber den Außenseiten (111A; 111'A) des Körpers (110) zurückgezogen erstreckt.

2. Elektrische Vorrichtung (100) gemäß Anspruch 1, bei der das Trägerelement (150; 250) wenigstens an einem der elektrischen Verbindungselemente (121, 122, 123) ein Montagemittel aufweist.

3. Elektrische Vorrichtung (100) gemäß dem vorangehenden Anspruch, bei der jedes Montagemittel das entsprechende elektrische Verbindungselement (121, 122, 123) einklemmt.

4. Elektrische Vorrichtung (100) gemäß dem vorangehenden Anspruch, bei der jedes Montagemittel einen Aufnahmeraum (152; 252) mit zwei aufeinander zugerichteten Innenseiten (153, 154; 253, 254) aufweist, von denen eine erste Innenseite (153; 253) dazu ausgelegt ist, sich an eine entsprechende Seite des elektrischen Verbindungselements (121, 122, 123) anzulegen, und eine zweite Innenseite (154; 254) wenigstens einen gekrümmten Teil (155; 255) aufweist, der dazu ausgelegt ist, das elektrische Verbindungselement (121, 122, 123) gegen die erste Innenseite (154; 254) zurückzudrücken.

5. Elektrische Vorrichtung (100) gemäß Anspruch 2, bei der das Montagemittel ein Mittel zum Montieren durch am entsprechenden elektrischen Verbindungselement Aufklippen ist.

6. Elektrische Vorrichtung (100) gemäß einem der vorangehenden Ansprüche, bei der das Trägerelement (150; 250) wenigstens einen ersten Arm (150; 260) mit zwei entgegengesetzten Enden aufweist, von denen jedes mit einem Mittel zum Befestigen an einem der elektrischen Verbindungselemente (121, 122, 123) versehen ist.

7. Elektrische Vorrichtung (100) gemäß einem der vorangehenden Ansprüche, bei der das Trägerelement (150; 250) in einem mittleren Teil eine Öffnung (156; 256) aufweist, die dazu ausgelegt ist, den Temperatursensor (200) aufzunehmen.

8. Elektrische Vorrichtung (100) gemäß einem der vorangehenden Ansprüche, bei der im Körper (110) drei elektrische Verbindungselemente (121, 122, 123) untergebracht sind und bei der das Trägerelement (150; 250), in dem der Temperatursensor (200) untergebracht ist, in Kontakt mit den drei elektrischen Verbindungselementen (121, 122, 123) angeordnet ist.

9. Elektrische Vorrichtung (100) gemäß dem vorangehenden Anspruch, bei der das Trägerelement (250) einen T-förmigen Querschnitt mit einem ersten, mit zwei entgegengesetzten Enden versehenen Arm (260), der Mittel zur Befestigung an zwei ersten elektrischen Verbindungselementen (121, 122) aufweist, und einem zweiten Arm (270), der sich zwischen dem ersten Arm (260) und dem dritten elektrischen Verbindungselement (123) erstreckt, aufweist.

10. Elektrische Vorrichtung (100) gemäß einem der vorangehenden Ansprüche, bei der das Trägerelement (150, 250) Mittel zur Befestigung an dem mit der Phase verbundenen Verbindungselement (121) und an dem mit dem Nullleiter verbundenen Verbindungselement (122) aufweist.

11. Elektrische Vorrichtung (100; 100') gemäß einem der vorangehenden Ansprüche, bei der der elektrische Sensor ein Thermistor (200) ist.

12. Elektrische Vorrichtung (100; 100') gemäß einem der vorangehenden Ansprüche, bei der das Trägerelement (150; 250; 350) aus einem polymeren, Keramikpartikel enthaltenden Material gefertigt ist.

13. Elektrische Vorrichtung (100; 100') gemäß einem der vorangehenden Ansprüche, bei der das zur Fertigung des Trägerelements (150; 250; 350) verwendete Material eine thermische Leitfähigkeit von mehr als oder gleich 10 Watt pro Quadratmeter-Kelvin aufweist.

14. Elektrische Vorrichtung (100) gemäß einem der vorangehenden Ansprüche, bei der die elektrische Vorrichtung ein elektrischer Stecker (100) ist, der zwei elektrische Verbindungsstifte (131, 132) aufweist, die aus einer vorderen Außenseite (111A) des Körpers (110) hervorstehen und von denen jeder im Inneren des Körpers (110) mit einem der elektrischen Verbindungselemente (121, 122, 123) elektrisch verbunden ist.

15. Elektrische Vorrichtung (100') gemäß Anspruch 1, bei der die elektrische Vorrichtung ein elektrischer Stecker (100') ist, der zwei elektrische Verbindungsstifte (131', 132') aufweist, die aus einer vorderen Außenseite (111'A) des Körpers (110') hervorstehen und von denen sich jeder im Inneren des Körpers durch eine Fahne fortsetzt, die eins der elektrischen Verbindungselemente (121', 122') bildet, das dazu bestimmt ist, einen leitenden Teil (115'A, 115'B) eines elektrischen Leiters (114'A, 114'B) aufzunehmen, und bei der das Trägerelement (350) von den Stiften (131', 132') durchquert ist, so daß es einen Träger für Stifte bildet.

16. Elektrische Vorrichtung (100') gemäß Anspruch 15, bei der das Trägerelement (350) in der allgemeinen Form einer Platte vorliegt, die mit zwei Löchern versehen ist, durch die hindurch die Stifte (131', 132') gezwängt sind, wobei die Platte eine Vorderseite (350A), die an die hintere Innenseite (111'B) der Vorderwand (111') des Körpers (110') angrenzt, und entgegengesetzt eine Rückseite (350B), auf der sich die besagten Fahnen (121', 122') der Stifte (131', 132') erheben, aufweist.

17. Elektrische Vorrichtung (100') gemäß einem der Ansprüche 15 und 16, bei der das Trägerelement (350) Mittel zum Einrasten einer Trägerkarte für eine gedruckte Schaltung (400) aufweist, an die jeder Temperatursensor (200) elektrisch angeschlossen ist.

## Claims

1. An electrical accessory (100; 100') including an electrically insulating body (110; 110') housing at least two electrical connection elements (121, 122, 123; 121',122',123'), and a temperature sensor (200), the electrical accessory being **characterized in that** the temperature sensor (200) is received in a thermally conductive and electrically insulating support element (150; 250; 350) that is distinct from said body (110; 110'), and that is fitted inside the body (110; 110') in such a manner as to extend between said electrical connection elements (121, 122, 123; 121', 122', 123'), being set back from the outside faces (111 A; 111'A) of said body (110).

2. An electrical accessory (100) according to claim 1, wherein said support element (150; 250) includes mounting means for mounting on at least one of said electrical connection elements (121, 122, 123).

3. An electrical accessory (100) according to the preceding claim, wherein each mounting means pinches the corresponding electrical connection element (121, 122, 123).

4. An electrical accessory (100) according to the preceding claim, wherein each mounting means includes a housing (152; 252) with two inside faces (153, 154; 253, 254) that face towards each other, of which a first inside face (153; 253) matches a corresponding face of the electrical connection element (121; 122; 123), and a second inside face (154; 254), that includes at least one curved portion (155; 255), is suitable for pushing the electrical connection element (121, 122, 123) against said first inside face (154; 254).

5. An electrical accessory according to claim 2, wherein said mounting means are a means for mounting by clipping onto the corresponding electrical connection element.

6. An electrical accessory (100) according to any preceding claim, wherein said support element (150; 250) comprises at least one first branch (150; 260) with two opposite ends, each provided with mounting means for mounting on a respective one of the electrical connection elements (121, 122, 123).

7. An electrical accessory according to any preceding claim, wherein, in a central portion, said support element (150; 250) includes an orifice (156; 256) that is suitable for receiving said temperature sensor (200).

8. An electrical accessory (100) according to any preceding claim, wherein the body (110) houses three electrical connection elements (121, 122, 123), and wherein the support element (150; 250) housing the temperature sensor (200) is placed in contact with the three electrical connection elements (121, 122, 123).

9. An electrical accessory (100) according to the preceding claim, wherein said support element (250) presents a section that is T-shaped, with a first branch (260) that is provided with two opposite ends, including mounting means for mounting on two first electrical connection elements (121, 122), and a second branch (270) that extends between said first branch (260) and the third electrical connection element (123).

10. An electrical accessory (100) according to any preceding claim, wherein said support element (150, 250) includes mounting means for mounting on the electrical connection element (121) connected to the line, and on the electrical connection element (122) connected to the neutral.

11. An electrical accessory (100; 100') according to any preceding claim, wherein said electrical sensor is a thermistor (200).

12. An electrical accessory (100; 100') according to any preceding claim, wherein said support element (150; 250; 350) is made of a polymer material containing ceramic particles.

13. An electrical accessory (100; 100') according to any preceding claim, wherein the material used to make the support element (150; 250; 350) presents thermal conductivity that is greater than or equal to 10 Watt per square meter-Kelvin.

14. An electrical accessory (100) according to any preceding claim, wherein said electrical accessory is an electric plug (100) including two electrical connection pins (131, 132) projecting from a front outside face (111A) of the body (110), each being electrically connected inside the body (110) to a respective one of said electrical connection elements (121, 122, 123).

15. An electrical accessory (100') according to claim 1, wherein said electrical accessory is an electric plug (100') including two electrical connection pins (131', 132') projecting from a front outside face (111'A) of the body (110'), each being extended inside the body by a stem that forms one of said electrical connection elements (121', 122') for receiving a conductive portion (115'A, 115'B) of an electrical conductor (114'A, 114'B), and wherein said support element (350) has said pins (131', 132') passing therethrough, such that it constitutes a pin support.

16. An electrical accessory (100') according to claim 15, wherein said support element (350) is generally in the form of a plate that is perforated with two orifices through which said pins (131', 132') are force fitted, the plate presenting a front face (350A) that is adjacent to the rear inside face (111'B) of the front wall (111') of the body (110'), and an opposite rear face (350B) from which said stems (121', 122') of the pins (131', 132') emerge.

17. An electrical accessory (100') according to claim 15 or 16, wherein the support element (350) includes snap-fastener means for snap-fastening a support card of a printed circuit (400) to which each temperature sensor (200) is electrically connected.
